# EUROPEAN PATENT APPLICATION

(11) **EP 4 741 812 A1**
(43) Date of publication of application: **13.05.2026**
(21) Application number: 24383231.8
(22) Date of filing: 12.11.2024
(51) Int. Cl.: G01N 27/60, H02N 1/04

(54) **METHOD AND SYSTEM FOR TESTING TRIBOELECTRIC MATERIALS**

(71) Applicant: Consejo Superior de Investigaciones Cientificas, 28006 Madrid (ES)
(72) Inventor: MARTÍN-GONZÁLEZ, Marisol, 28006 Madrid (ES); GARCÍA COBOS, Carlos, 28006 Madrid (ES)
(74) Representative: Ungria López, Javier

(57) **Abstract**

A method and system for testing triboelectric materials comprising: a first platform (2); a counter-electrode (5) arranged on the first platform to receive a piece of a first triboelectric material; a force measurement means to measure force at the first platform; a piston (11); a second platform (12) at one end of the piston; an electrode (13) arranged at the second platform to receive a piece of a second triboelectric material; a drive system (15) to vertically move the piston to a position with contact between the two triboelectric materials at a certain level of force and frequency; and measuring means to measure an output signal as result of the contact between the triboelectric materials.

## Description

### OBJECT OF THE INVENTION

The object of the present invention refers to a method and system for testing triboelectric elements and more specifically to obtain voltage, charge and current measurements generated by a piece of material with triboelectric properties in a controlled way.

### BACKGROUND OF THE INVENTION

The triboelectric effect is a contact induced electrification in which a material becomes electrically charged after it is contacted with a different material through friction or touching, so a triboelectric nanogenerator (TENG) generates an electric field from the mechanical energy.

Nowadays, triboelectric nanogenerators are earning interest in electrical industry, especially in energy harvesting and self-powered systems. For example, TENGs can be integrated into clothing, shoes, or accessories to harvest energy from human motion and power wearable devices. Autonomous Sensors as forest fire detectors, dust and particle sensors, and LED power supplies may also benefit from triboelectric material, as well as "Smart Clothing" may embed TENG based sensors in order to measure vital signs and monitor physical exercise. On the other hand, the strong development of loT devices and their low energy requirements may rely on triboelectric generators as they provide costeffective and eco-friendly energy harvesting technology.

In summary, materials with triboelectric properties offer versatile applications, from powering wearables to monitoring environmental conditions, and they continue to evolve toward a more sustainable and connected future.

However, the specific performance of every material and every structure of a same material is uncertain until a full triboelectric nanogenerator is built and start operating. The state of the art often resort to rough estimations provided for similar application of the same material stored in databases, so the performance forecast of any change in the structure of the material cannot be accurate.

Therefore, the state of the art is missing accurate methods and systems for testing different materials and structures with triboelectric properties.

### DESCRIPTION OF THE INVENTION

In order to achieve the objectives and avoid the drawbacks mentioned in previous section, a first aspect of present invention refers to a system for testing triboelectric materials comprising:
- a first platform;
- a counter-electrode arranged on the first platform, configured to receive a piece of a first triboelectric material;
- a force measurement means configured to measure force at the first platform;
- a piston;
- a second platform arranged at one end of the piston;
- an electrode arranged at the second platform, configured to receive a piece of a second triboelectric material;
- a drive system operatively associated to the piston, where the drive system is configured to vertically move the piston from a first position without contact to a second position with contact between the piece of the first triboelectric material and the piece of the second triboelectric material at a certain level of force and frequency; and
- measuring means electrically connected to both the electrode and the counter-electrode configured to measure an output signal as result of the contact between the piece of the first triboelectric material and the piece of the second triboelectric material.

In one embodiment of the invention, it is further considered a control module, connected to the drive system, configured to set the certain level of force and frequency to be applied by the piston.

According to one embodiment of the invention, the measuring means further comprise a plurality of relays arranged in parallel, being each relay connected to a different resistor; wherein the control module is further configured to activate one relay from the plurality of relays to let the output signal pass through a selected resistor. Thus, advantageously, present invention may filter noise of the output signal by selecting one of the resistors.

In one specific embodiment of the invention, the measuring means further comprise a rectifier-capacitor board, configured to convert the output signal into a direct current signal.

In one embodiment of the invention, the measuring means comprise a Keithley electrometer configured to measure the output signal.

In one embodiment of the invention, it is further comprised a glass plate arranged on the first and the second platform. Additionally, according to one specific embodiment, present invention further comprises a portion of double-side tape arranged on the glass plate of any one of the first and second platform, configured to hold the counter-electrode or the electrode, respectively. Additionally, according to one specific embodiment, present invention further comprises a portion of double-side copper tape arranged on any one of the counter electrode and the electrode, configured to hold the piece of first triboelectric material or the piece of the second triboelectric material, respectively.

According to one specific embodiment, the force measurement means are a pressure sensor arranged on the first platform.

According to one specific embodiment, the piece of the first triboelectric material is a film of polytetrafluoroethylene.

A second aspect of present invention refers to a method for testing triboelectric materials comprising the following steps:
- assembling a piece of a first triboelectric material on a counter-electrode arranged on a first platform;
- assembling a piece of a second triboelectric material on an electrode arranged at a second platform, where the second platform is arranged at the end of a piston;
- vertically moving the piston, by a drive system, from a first position without contact to a second position with contact between the piece of the first triboelectric material and the piece of the second triboelectric material at a certain level of force and frequency; and
- measuring, by measuring means, an output signal as result of the contact between the piece of the first triboelectric material and the piece of the second triboelectric material.

According to one specific embodiment of the invention, moving the piston a certain level of force and frequency comprises: setting, by a control module connected to the drive system, the certain level of force and frequency to be applied by the piston; measuring, by force measurement means, the force at the first platform during contact between the piece of the first triboelectric material and the piece of the second triboelectric material; receiving, by the control module, force measures from the force measurement means; determining, by the control module, a movement upwards of the piston to the first position based on the certain level of force set; and determining, by the control module, a movement downwards of the piston to the second position based on the certain frequency set.

According to one specific embodiment of the invention, measuring an output signal further comprises: connecting both the electrode and the counter-electrode to a resistor box having a plurality of relays arranged in parallel, being each relay connected to a different resistor; activating, by the control module, one relay from the plurality of relays to let the output signal pass through a selected resistor; connecting the resistor box to an electrometer; and determining, by processing means connected to the electrometer, at least one voltage and charge measurement based on the output signal of the electrometer.

According to one specific embodiment of the invention, wherein measuring an output signal further comprises: connecting the electrode to a resistor box having a plurality of relays arranged in parallel, being each relay connected to a different resistor; activating, by the control module, one relay from the plurality of relays to let the output signal pass through a selected resistor; connecting the resistor box to an electrometer; connecting the counter electrode to the electrometer; and determining, by processing means connected to the electrometer, at least one current measurement based on the output signal of the electrometer.

According to one specific embodiment of the invention, measuring an output signal further comprises: connecting both the electrode and the counter-electrode to a rectifier-capacitor board; converting, by the rectifier-capacitor board, an alternating current generated at the electrodes to a direct current; connecting the rectifier-capacitor board to an electrometer; and determining, by processing means connected to the electrometer, at least one charge measurement of the capacitor based on the output signal of the electrometer.

Present invention involves several technical advantages, including the ability to reproduce exact pressure and frequency conditions during material testing. Advantageously, one of the triboelectric materials can be kept unchanged (for example, a Teflon film) and the structure of the other material can be modified, thus obtaining performance measurements of different nanostructures of the same material. Slight performance variations between different structures of the same material in small samples are difficult to observe with other state-of-the-art measurement systems. However, the benefits of the system configuration of the present invention are enhanced in the case of triboelectric measurement, where signal levels are very small.

### BRIEF DESCRIPTION OF THE FIGURES

To complete the description and in order to give a better understanding of the features of the invention, this specification is accompanied by a series of drawings that are an integral part of the same, wherein the following has been represented for illustration purposes and without limitation:
**Figure 1** shows a schematic diagram of the system for testing triboelectric materials in a first position where there is no contact between the electrodes.
**Figure 2** shows the schematic diagram of the system for testing triboelectric materials of Figure 1 in a second position where there is contact between the electrodes.
**Figure 3** shows a schematic diagram of an electrode of the system for testing triboelectric materials.
**Figure 4** shows a block diagram illustrating principal components and connections of the system for obtaining voltage and charge measurements associated to the triboelectric materials being tested.
**Figure 5** shows a block diagram illustrating principal components and connections of the system for obtaining current measurements associated to the triboelectric materials being tested.
**Figure 6** shows a block diagram illustrating principal components and connections of the system for obtaining capacitor charge measurements associated to the triboelectric materials being tested.

A list of the different elements that have been represented in the figures and which form part of the invention is detailed below.
1. Supporting structure
2. First platform
3. Base
4. Glass plate
5. Counter-electrode
6. Double-side tape
7. Copper sheet
8. Double-side copper tape
9. Polymer film
10. Arm
11. Piston
12. Second platform
13. Electrode
14. Triboelectric material
15. Drive system
16. Pressure sensor module
17. Wire
18. Resistor box
19. Electrometer
20. Rectifier-capacitor board

### DETAILED DESCRIPTION OF THE INVENTION

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield a further embodiment.

A number of embodiments will be explained below. In this case, identical structural features are identified by identical reference symbols in the drawings. The structures shown in the drawings are not depicted true to scale but rather serve only for the better understanding of the embodiments.

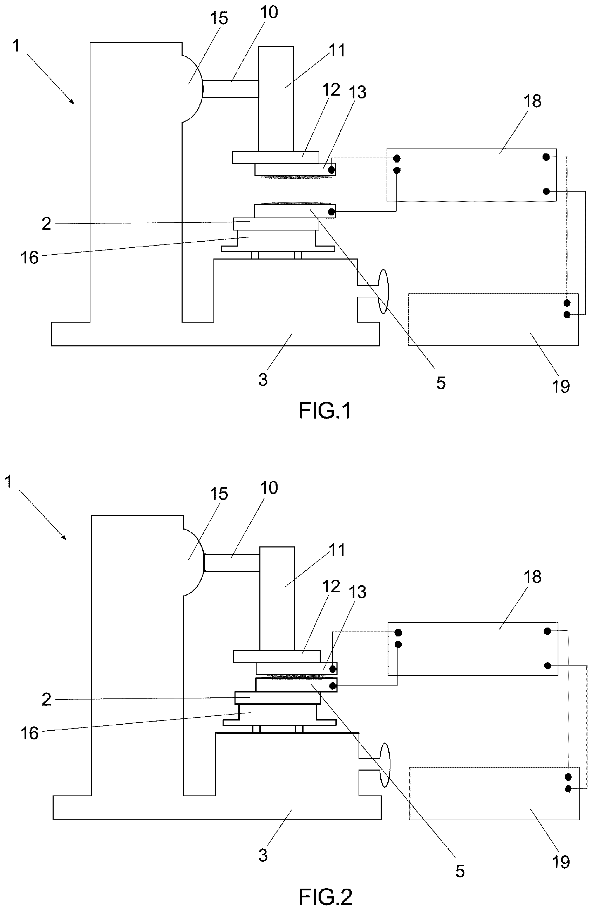

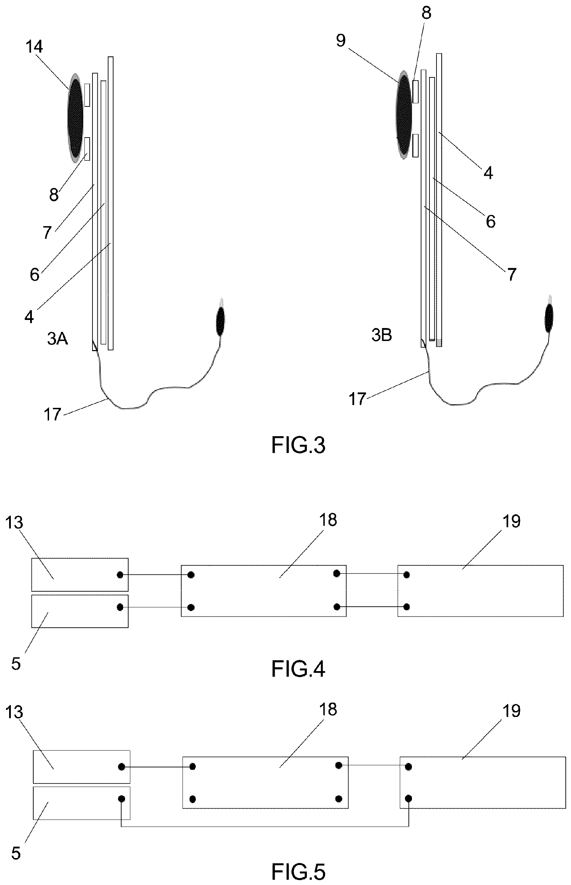

**Figure 1** of the accompanying drawings illustrates a system for testing triboelectric materials according to an embodiment of the invention that includes a supporting structure **1** having a first platform **2** arranged on the base **3** of the supporting structure **1.** There is a glass plate **4** mounted on the first platform **2.** A counter-electrode **5** is fixed to the glass plate **4** by means of a double-side tape **6.** The counter-electrode shown in **Figure 3B**, is made-up of a copper sheet **7,** a double-side copper tape **8** and a polymer film **9,** such as polytetrafluoroethylene (PTFE), commonly known as Teflon. The supporting structure **1** has an arm **10** horizontally extending from the top part to place a piston **11** mechanism vertically over the first platform **2,** where a second platform **12** is arranged at the bottom part of the piston **11** mechanism. There is also a glass plate **4** mounted on the second platform **12.** An electrode **13** is fixed to the glass plate **4** by means of a double-side tape **6.** The electrode **13,** as shown in **Figure 3A**, is made-up of a copper sheet **7,** a double-side copper tape **8** and a triboelectric material **14,** such as polylactic acid (PLA). The piston **11** mechanism is operatively associated to a drive system **15** which controls the movement of the piston. Force measurement means are provided associated to the first platform **2** to measure force during contact of the electrodes **5, 13.** For example, a pressure sensor module **16** is arranged under the first platform **2** to eventually sense the pressure applied by the piston **11.**

**Figure 2** of the accompanying drawings illustrates the system of figure 1, but in a second position, where a motor of the drive system **15** has moved the piston downwards from a first position without contact to a second position with contact between the electrodes. Thus, the vertical displacement generated by the piston (at a frequency that can vary between 1 and 10 Hz), moving the two electrodes closer to and further away from each other (the pressure exerted at the moment in which both electrodes get in contact can be set between 0 and 100 N), which generates an alternating electrical signal. These electrodes consist of the sample to be analyzed (for example, a sample of nanostructured PLA and a PTFE film) fixed using double-sided copper tape to a copper plate with a wire **17** soldered to it.

The electrodes (electrode **13** and counter-electrode **5**) are connected to measuring means in order to obtain different electrical measures based on the electrical output signal resulting of the triboelectric effect generated by the contact between the pieces of triboelectric materials arranged on the electrodes.

Measuring means comprise a Keithley electrometer **19** which is commonly considered to be the authority on precision low level DC measurements. Between the Keithley electrometer **19** and the electrodes of the system, it is interconnected a resistor box **18.** The resistor box **18** comprises a plurality of different value resistors (for example, ten resistors between 100Ω and 500 MΩ) connected in parallel and each of them associated to one relay. A control module control the activation of the relays, so the user may select any of the resistors to let the output signal generated by the electrodes pass through it. Since the signal values are very low, this resistor box **18** is used to filter the noise, thus obtaining the signal more accurately.

**Figure 4** of the accompanying drawings illustrates the connection of both the counterelectrodes **5** and the electrode **13** to the resistor box **18** and the electrometer **19** in order to obtain voltage and charge measurements based on the output signal of the electrodes.

**Figure 5** of the accompanying drawings illustrates the connection of the electrode **13** to the resistor box **18** and the counter-electrode **5** to the electrometer **19** in order to obtain current measurements based on the output signal of the electrodes.

Thus, to obtaining voltage, charge and current measurements, present invention performs the following steps. Firstly, the triboelectric materials to be tested are assembled to both the electrode **13** and the counter-electrode **5.** Then, both the counter-electrode **5** and the electrode **13** are placed on the first and second platforms **2, 12,** respectively. The force (0-100 N) and frequency (1-10 Hz) for the measurement are set in the control module. The electrodes are then connected to the resistor box 18 and the electrometer 19, depending on the type of measurement to be taken. The triboelectric measurement system is activated to initiate the contact-separation process. The electrical magnitude to measure is selected, the load resistance is chosen, and the measurement time is specified in the control module. When the measurement has finished, the software saves the data automatically. The output of the electrometer is connected to a computer having a graphical programming environment used for data acquisition, instrument control, and industrial automation, such as LabView.

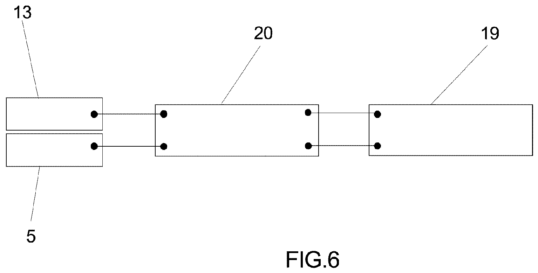

**Figure 6** shows a block diagram illustrating principal components and connections of the system for obtaining capacitor charge measurements associated to the triboelectric materials being tested. The vertical displacement generated by the piston **11** bringing the two electrodes closer and further away from each other results in a alternating current outputting the electrodes. These electrodes are provided with a wire **17** shown in **Figure 3** for connection to the measuring means. Both wires are connected to a rectifier-capacitor board **20.** When connected to the board, the output signal of the electrodes passes through a current rectifier **20** in order to filter the negative part of the received wave. After this, all the current flows to a capacitor, in a range between 1 µF and 100 µF, which starts a process of charging. After a charging time, a saturation point is reached. At this saturation point, since it cannot collect more current, all the incoming wave passes through it, thus remaining at the same voltage, which is known as the maximum voltage. In this way, the capacitor provides a direct current signal from the alternating current signal generated by the electrodes. Finally, to measure the voltage in the capacitor, the output of the rectifier-capacitor board **20** is connected to the Keithley electrometer **19.** The data measured by the Keithley electrometer are sent to the computer having a graphical programming environment used for data acquisition, instrument control, and industrial automation, such as LabView.

The present invention is not limited by the embodiment disclosed herein. Other embodiments can be made by persons skilled in the art in light of this description. In consequence, the scope of the invention is defined by the following claims.

## Claims

1. A system for testing triboelectric materials **characterized by** comprising:
- a first platform (2);
- a counter-electrode (5) arranged on the first platform (2), configured to receive a piece of a first triboelectric material;
- a force measurement means configured to measure force at the first platform (2);
- a piston (11);
- a second platform (12) arranged at one end of the piston (11);
- an electrode (13) arranged at the second platform (12), configured to receive a piece of a second triboelectric material;
- a drive system (15) operatively associated to the piston (11), where the drive system is configured to vertically move the piston (11) from a first position without contact to a second position with contact between the piece of the first triboelectric material and the piece of the second triboelectric material at a certain level of force and frequency; and
- measuring means, electrically connected to both the electrode (13) and the counter-electrode (5), configured to measure an output signal as result of the contact between the piece of the first triboelectric material and the piece of the second triboelectric material.

2. The system of claim 1 further comprising a control module, connected to the drive system, configured to set the certain level of force and frequency to be applied by the piston.

3. The system of claim 2 wherein the measuring means further comprise a plurality of relays arranged in parallel, being each relay connected to a different resistor; wherein the control module is further configured to activate one relay from the plurality of relays to let the output signal pass through a selected resistor.

4. The system of any one of claims 2-3 wherein the measuring means further comprise a rectifier-capacitor board, configured to convert the output signal into a direct current signal.

5. The system of any one of previous claims wherein the measuring means comprises a Keithley electrometer configured to measure the output signal.

6. The system of any one of previous claims further comprising a glass plate arranged on the first and the second platform.

7. The system of claim 6 further comprising a portion of double-side tape arranged on the glass plate of any one of the first and second platform, configured to hold the counter-electrode or the electrode, respectively.

8. The system of claim 7 further comprising a portion of double-side copper tape arranged on any one of the counter electrode and the electrode, configured to hold the piece of first triboelectric material or the piece of the second triboelectric material, respectively.

9. The system of any one of previous claims wherein the force measurement means are a pressure sensor arranged on the first platform.

10. The system of any one of previous claims wherein the piece of the first triboelectric material is a film of polytetrafluoroethylene.

11. A method for testing triboelectric materials **characterized by** comprising the following steps:
- assembling a piece of a first triboelectric material on a counter-electrode (5) arranged on a first platform (2);
- assembling a piece of a second triboelectric material on an electrode (13) arranged at a second platform (12), where the second platform is arranged at the end of a piston (11);
- vertically moving the piston (11), by a drive system, from a first position without contact to a second position with contact between the piece of the first triboelectric material and the piece of the second triboelectric material at a certain level of force and frequency; and
- measuring, by measuring means, an output signal as result of the contact between the piece of the first triboelectric material and the piece of the second triboelectric material.

12. The method of claim 11 wherein moving the piston a certain level of force and frequency comprises:
- setting, by a control module connected to the drive system, the certain level of force and frequency to be applied by the piston;
- measuring, by force measurement means, the force at the first platform during contact between the piece of the first triboelectric material and the piece of the second triboelectric material;
- receiving, by the control module, force measures from the force measurement means;
- determining, by the control module, a movement upwards of the piston to the first position based on the certain level of force set; and
- determining, by the control module, a movement downwards of the piston to the second position based on the certain frequency set.

13. The method of any one of claims 11-12 wherein measuring an output signal further comprises:
- connecting both the electrode and the counter-electrode to a resistor box having a plurality of relays arranged in parallel, being each relay connected to a different resistor;
- activating, by the control module, one relay from the plurality of relays to let the output signal pass through a selected resistor;
- connecting the resistor box to an electrometer; and
- determining, by processing means connected to the electrometer, at least one voltage and charge measurement based on the output signal of the electrometer.

14. The method of any one of claims 11-12 wherein measuring an output signal further comprises:
- connecting the electrode to a resistor box having a plurality of relays arranged in parallel, being each relay connected to a different resistor;
- activating, by the control module, one relay from the plurality of relays to let the output signal pass through a selected resistor;
- connecting the resistor box to an electrometer;
- connecting the counter electrode to the electrometer; and
- determining, by processing means connected to the electrometer, at least one current measurement based on the output signal of the electrometer.

15. The method of any one of claims 11-12 wherein measuring an output signal further comprises:
- connecting both the electrode and the counter-electrode to a rectifier-capacitor board;
- converting, by the rectifier-capacitor board, an alternating current generated at the electrodes to a direct current;
- connecting the rectifier-capacitor board to an electrometer; and
- determining, by processing means connected to the electrometer, at least one charge measurement of the capacitor based on the output signal of the electrometer.
